# EUROPEAN PATENT SPECIFICATION

(11) **EP 4 592 837 B1**
(45) Date of publication and mention of the grant of the patent: **05.08.2026**
(21) Application number: 24210443.8
(22) Date of filing: 03.11.2024
(51) Int. Cl.: G06F 9/451, G06F 3/0485

(54) **METHOD AND DEVICE FOR AUTOMATICALLY SCROLLING AND CAPTURING A DIALOGUE BOX RUNNING ON AN ANDROID-BASED PORTABLE TERMINAL**
VERFAHREN UND VORRICHTUNG ZUM AUTOMATISCHEN SCROLLEN UND ERFASSEN EINER AUF EINEM ANDROIDBASIERTEN TRAGBAREN ENDGERÄT LAUFENDEN DIALOGBOX
PROCÉDÉ ET DISPOSITIF DE DÉFILEMENT ET DE CAPTURE AUTOMATIQUES D'UNE BOÎTE DE DIALOGUE S'EXÉCUTANT SUR UN TERMINAL PORTABLE À BASE D'ANDROID

(30) Priority: 26.01.2024 KR 20240012251
(43) Date of publication of application: 30.07.2025
(73) Proprietor: Gmdsoft Inc., Seongnam-si, Gyeonggi-do 13494 (KR)
(72) Inventor: LEE, Yong Woo, 18472 Hwaseong-si (KR); LEE, Kyung Su, 16014 Uiwang-si (KR); KIM, Hyun Soo, 13581 Seongnam-si (KR)
(74) Representative: Prüfer & Partner mbB Patentanwälte · Rechtsanwälte

(56) References cited:
- WO-A1-2017/152748
- CN-A- 114 443 191
- US-A1- 2016 266 757

## Description

### CROSS-REFERENCE TO RELATED APPLICATION(S)

This application claims priority from and the benefit of Korean Patent Application No. 10-2024-0012251 filed on January 26, 2024.

### BACKGROUND

### 1. Field

The present invention relate to technology for automatically scrolling and capturing a chat window running on an Android-based portable terminal.

### 2. Related Art

Screen capture technology provides a function of capturing and saving a current screen of a device as an image.

A screen of a monitor or a display is stored in a frame buffer. The frame buffer maintains information on each pixel of the screen in a memory.

Screen capture mainly includes a process of reading data from the frame buffer and saving the same as an image.

An operating system provides an API or a command to capture the screen. For example, on Android, the screen may be captured using "adb shell screencap" command.

Some operating systems may also provide an API that a developer may use to take screenshot programmatically.

A graphics and image processing library is used to capture and save an image. This library provides a variety of functions and tools required to create and manipulate an image.

For example, in Python, libraries such as Pillow (PIL) and OpenCV are widely used.

When capturing a screen, a screen resolution and ratio of a device need to be considered. Without considering this, a captured image may be distorted or may be displayed at a different ratio than the original.

A process of capturing the screen may affect a device performance and a resource use. Therefore, it is important to optimize the performance by performing capture in an appropriate manner.

Some platforms may impose restrictions on capturing a screen of a different app due to security and permission issues. In particular, in some cases, user consent or specific permission may be required.

Screen capture technology is used in various environments and such background technologies need to be appropriately applied by considering characteristics of a device and an operating system.

Patent documents include (Patent document 1) Korean Patent Laid-Open Publication No. 10-2016-0124053 titled "smartphone having a certification function of smartphone screen capture image and a method thereof," (Patent document 2) Japanese Patent Registration No. 7167756 titled "image creation device, image creation program, and image creation method," and (Patent document 3) Korean Patent Laid-Open Publication No. 10-2018-0017746 titled "mobile terminal and method for controlling the same."

WO 2017/152748 A1 discloses a scrolling screen capture method in which a scroll command is input and the device automatically scrolls in the scrollable direction to capture a continuous screenshot.

US 2016/266757 A1 teaches capturing a screen, scrolling by a preset pixel height, and repeatedly capturing images until the end of the scrollable region, then combining the images.

CN 114443191 A discloses acquiring screen capture information and subsequently extracting XML-based UI data using the Android uiautomator dump command.

### SUMMARY

An objective of the present invention is to automatically scroll and capture a chat window running on an Android-based portable terminal.

An objective of the present invention is to accurately and quickly process chat window capture of a portable terminal.

The invention is defined by the independent claims. The dependent claims disclose preferred embodiments of the invention.

An automatic scroll capture method according to an example embodiment may include receiving a screen capture command as input; acquiring XML data for a current screen of the portable terminal using Android's screen dump function based on the input screen capture command; acquiring at least one piece of XML data while scrolling the screen by the number of selected pixels at a location at which the XML data for the current screen is acquired; and creating a screen capture image by integrating the acquired XML data.

The acquiring of the at least one piece of XML data while scrolling the screen by the number of selected pixels at the location at which the XML data for the current screen is acquired according to an example embodiment may include acquiring the at least one piece of XML data by changing a location from an n-th location at which the XML data for the current screen is acquired to a specific location while scrolling the screen by the number of selected pixels.

The acquiring of the at least one piece of XML data while scrolling the screen by the number of selected pixels at the location at which the XML data for the current screen is acquired according to an example embodiment may include acquiring the at least one piece of XML data by changing the location until an end of the running chat window is reached.

The acquiring of the at least one piece of XML data while scrolling the screen by the number of selected pixels at the location at which the XML data for the current screen is acquired according to an example embodiment may include identifying an end location included in the screen capture command; and acquiring the at least one piece of XML data while scrolling the screen until the identified end location is reached.

The creating of the screen capture image by integrating the acquired XML data according to an example embodiment may include identifying common data between consecutive XML data; combining a captured image for the current screen and a captured image for a next screen and combining a captured image after a portion corresponding to the common data in the captured image of the next screen; and creating the screen capture image by combining a captured image for all remaining of the acquired XML data.

A device for automatically scrolling and capturing a chat window running in an Android-based portable terminal according to an example embodiment may include a screen capture command input unit configured to receive a screen capture command as input; an XML data acquisition unit configured to acquire XML data for a current screen of the portable terminal using Android's screen dump function based on the input screen capture command, and to acquire at least one piece of XML data while scrolling the screen by the number of selected pixels at a location at which the XML data for the current screen is acquired; and a screen capture image creation unit configured to create a screen capture image by integrating the acquired XML data.

The XML data acquisition unit according to an example embodiment may be configured to acquire the at least one piece of XML data by changing a location from an n-th location at which the XML data for the current screen is acquired to a specific location while scrolling the screen by the number of selected pixels.

The XML data acquisition unit according to an example embodiment may be configured to acquire the at least one piece of XML data by changing the location until an end of the running chat window is reached.

The XML data acquisition unit according to an example embodiment may be configured to identify an end location included in the screen capture command, and to acquire the at least one piece of XML data while scrolling the screen until the identified end location is reached.

The screen capture image creation unit according to an example embodiment may be configured to identify common data between consecutive XML data, to combine a captured image for the current screen and a captured image for a next screen and combine a captured image after a portion corresponding to the common data in the captured image of the next screen, and to create the screen capture image by combining a captured image for all remaining of the acquired XML data.

According to example embodiments, it is possible to automatically scroll and capture a chat window running on an Android-based portable terminal.

According to example embodiments, it is possible to accurately and quickly process chat window capture of a portable terminal.

Further areas of applicability will become apparent from the description provided herein. The description and specific examples in this summary are intended for purposes of illustration only and are not intended to limit the scope of the present disclosure.

### BRIEF DESCRIPTION OF THE FIGURES

Embodiments will be described in more detail with regard to the figures, wherein like reference numerals refer to like parts throughout the various figures unless otherwise specified, and wherein:
FIG. 1 is a flowchart illustrating a method of automatically scrolling and capturing a chat window in an Android-based portable terminal according to an example embodiment;
FIG. 2 illustrates a chat window running on an Android-based portable terminal;
FIG. 3 illustrates XML data for a running chat window;
FIG. 4 illustrates coordinates in XML data; and
FIG. 5 is a diagram illustrating a device for automatically scrolling and capturing a chat window in an Android-based portable terminal according to an example embodiment.

### DETAILED DESCRIPTION

The specific structural or functional descriptions of example embodiments according to the concept of the present invention described herein are merely intended for the purpose of describing the example embodiments according to the concept of the present invention and the example embodiments according to the concept of the present invention may be implemented in various forms and are not construed as limited to the example embodiments described herein.

Various modifications and various forms may be made to the example embodiments according to the concept of the present invention and thus, the example embodiments are illustrated in the drawings and described in detail through the present specification. However, it should be understood that the example embodiments according to the concept of the present invention are not construed as limited to specific implementations and should be understood to include modifications that fall within the scope defined by the appended claims.

Although terms of "first," "second," and the like are used to explain various components, the components are not limited to such terms. These terms are used only to distinguish one component from another component. For example, a first component may be referred to as a second component, or similarly, the second component may be referred to as the first component without departing from the scope according to the concept of the present invention.

When it is mentioned that one component is "connected" or "accessed" to another component, it may be understood that the one component is directly connected or accessed to another component or that still other component is interposed between the two components. In addition, when it is described that one component is "directly connected" or "directly accessed" to another component, it should be understood that still other component is absent therebetween. Likewise, expressions describing relationships between components, for example, "between" and "immediately between" and "immediately adjacent to" may also be construed as described in the foregoing.

The terminology used herein is for the purpose of describing particular example embodiments only and is not to be limiting of the present invention. As used herein, the singular forms "a," "an," and "the" are intended to include the plural forms as well, unless the context clearly indicates otherwise. It will be further understood that the terms "comprises/includes" or "has," when used in this specification, specify the presence of stated features, integers, stages, operations, components, parts, or combinations thereof, but do not preclude the presence or addition of one or more other features, integers, stages, operations, components, parts, or combinations thereof.

Unless otherwise defined herein, all terms used herein including technical or scientific terms have the same meanings as those generally understood by one of ordinary skill in the art. Terms defined in dictionaries generally used should be construed to have meanings matching contextual meanings in the related art and are not to be construed as an ideal or excessively formal meaning unless otherwise defined herein.

Hereinafter, example embodiments will be described in detail with reference to the accompanying drawings. However, the scope of the claims is not limited to or restricted by the example embodiments. Like reference numerals presented in the respective drawings refer to like components throughout.

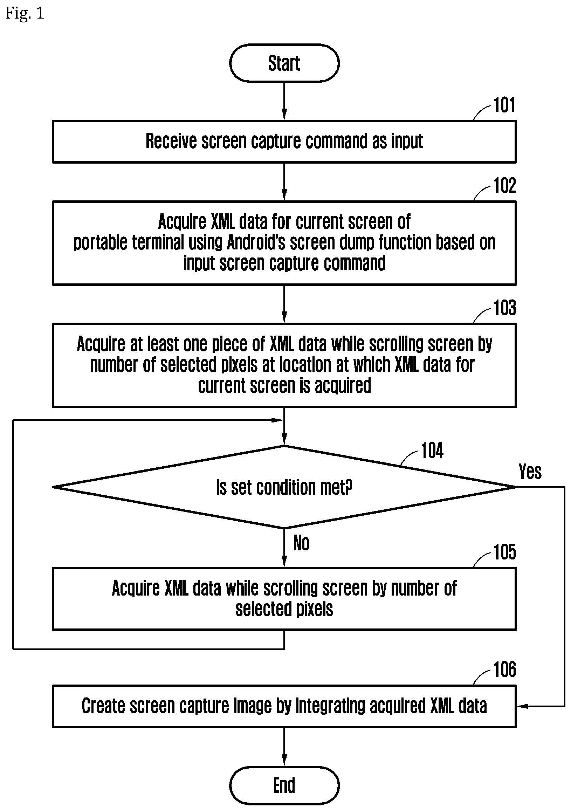

FIG. 1 is a flowchart illustrating a method of automatically scrolling and capturing a chat window in an Android-based portable terminal according to an example embodiment.

An automatic scroll capture method according to an example embodiment receives a screen capture command from a user or a running program as input (operation 101).

The automatic scroll capture method according to an example embodiment may acquire XML data for a current screen of the portable terminal using Android's screen dump function based on the input screen capture command (operation 102), and may acquire at least one piece of XML data while scrolling the screen by the number of selected pixels at a location at which the XML data for the current screen is acquired (operation 103).

In response to the input of the screen capture command from the user or the running program, it may act as a trigger to start an automatic scrolling and capturing task.

For XML data acquisition, the XML data for the current screen may be acquired using Android's screen dump function based on the input screen capture command. Android's screen dump function provides a user interface (UI) structure of a chat window and corresponding information in an XML format.

To perform automatic scroll and acquire XML data, a series of processes may be repeated. That is, additional XML data may be acquired by analyzing the acquired XML data and by automatically scrolling the chat window in consideration of a height and a scroll unit of the chat window. This process may be repeated until a preset condition is met or an end of the chat window is reached.

That is, the automatic scroll capture method according to an example embodiment may determine whether the set condition is met (operation 104) and, if the set condition is not met, may acquire the XML data while scrolling the screen by the number of selected pixels (operation 105).

If the set condition is determined to be met in operation 104, the automatic scroll capture method according to an example embodiment may create a screen capture image by integrating the acquired XML data (operation 106).

The set condition may be a condition for determining whether the set condition has changed to a specific location through scrolling.

For example, to acquire at least one piece of XML data while scrolling the screen by the number of selected pixels, the at least one piece of XML data may be acquired by changing a location from an n-th location at which XML data for the current screen is acquired to a specific location by scrolling the screen by the selected number of pixels.

In this process, the at least one piece of XML data may be acquired by changing the location until an end of the running chat window is reached.

Also, to acquire the at least one piece of XML data while scrolling the screen by the number of selected pixels, an end location included in the screen capture command may be identified and the at least one piece of XML data may be acquired while scrolling the screen until the identified end location is reached.

Also, to create the screen capture image by integrating the acquired XML data, common data between consecutive XML data may be identified, a captured image for the current screen and a captured image for a next screen may be combined and, here, a captured image after a portion corresponding to the common data in the captured image of the next screen may be combined.

Also, the screen capture image may be created by combining a captured image for all remaining of the acquired XML data.

In this process, the captured image may be created by synthesizing all collected information and by automatically scrolling the remaining part of the screen according to each piece of the XML data.

Captured images of various parts may be combined in consideration of information such as a location, a size, and text of each UI element included in the XML data. A screen part represented by each piece of the XML data may be accurately provided at a corresponding location and a screen capture image of the entire chat window may be created accordingly.

The image created in this manner may be visually provided for the user or may be used for various purposes such as automated text, analysis, and documentation.

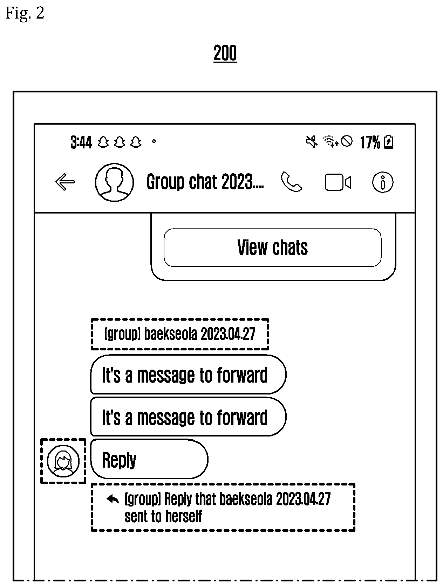

FIG. 2 illustrates an example 200 of a chat window running on an Android-based portable terminal.

FIG. 2 is a visual representation of a chat window of an application running in an Android environment.

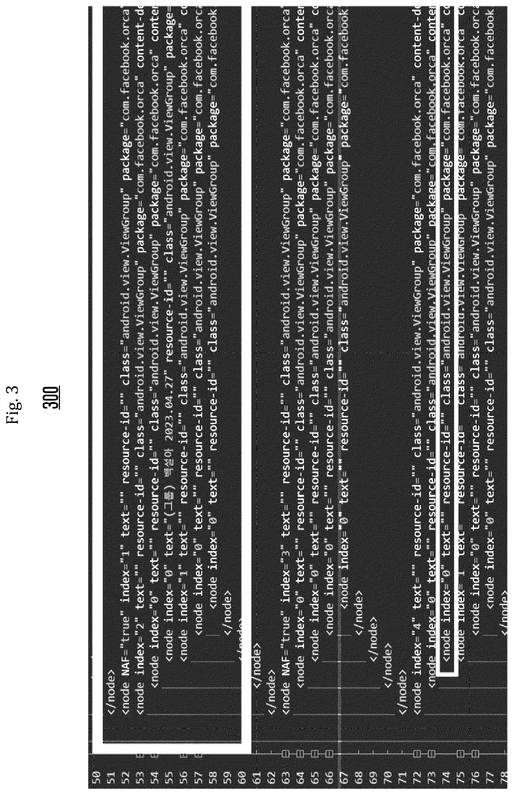

In FIG. 2, a chat window displayed on a screen of a portable terminal is illustrated. The chat window includes a plurality of UI elements and various elements such as buttons, text, and images may be visually verified. Also, a part of the chat window includes XML data as shown in FIG. 3 and structural information on the corresponding chat window may be verified.

FIG. 2 may be used to visually understand and analyze the screen of the application running on the Android terminal for screen capture.

Technology for capturing a chat window employs a variety of methods and techniques and screen capture and image processing technology is mainly applied.

Screen capture technology may be used to capture the chat window.

The present invention targets an Android-based portable terminal, for example, an Android smartphone.

On Android, a screen of a current portable terminal may be captured using the 'adb shell screencap' command.

Although image processing technology may be used to extract a specific area from a captured image and to analyze necessary information, XML data for the current screen may be used herein.

Specific UI elements, such as screen coordinates and object within the chat window may be expressed as XML data.

Also, Android provides XML data about a current screen.

Herein, automation tools, such as UI Automator and Appium, may be used to automate a capture and analysis task using the acquired XML data.

FIG. 3 illustrates an example 300 of XML data for a running chat window.

FIG. 3 visually represents a UI structure of a chat window and detailed information on each UI element.

In FIG. 3, various UI elements within the chatroom are listed in a hierarchical structure. Attributes such as a location, a size, and text are indicated in each UI element, making it easy to identify a feature of a corresponding element. Also, an arrangement of each element in the chatroom may be verified through a location at which the XML data is displayed.

FIG. 3 may be used to easily understand and analyze a structure of the chat window by visually representing information collected by an XML data acquisition unit.

By plotting XML data, it is possible to refer to a specific part of the chat window or to provide a basis for automated tasks.

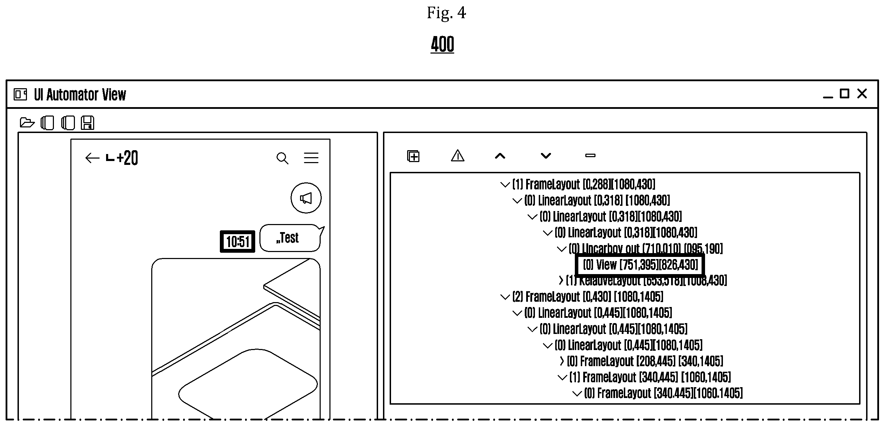

FIG. 4 illustrates an example 400 of coordinates in XML data.

When capturing while scrolling a screen, only a coordinate value may change in the case of the same speech bubble and this change value may indicate a level of scroll in a corresponding image.

FIG. 4 visually shows coordinates of a specific UI element extracted from XML data.

In FIG. 4, a coordinate value indicating a location of the specific UI element included in the XML data is displayed. This coordinate value indicates a relative location based on an upper left corner of the screen. Values of X-axis and Y-axis may accurately express a location of the corresponding UI element on the screen.

Referring to FIG. 4, among information collected by the XML data acquisition unit, coordinate information may be visually verified and, through this, may be used to understand and analyze an accurate location of a UI element. Afterwards, coordinate information may be used for an automatic scrolling and capturing task.

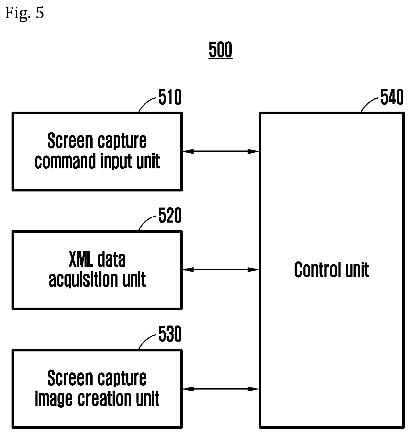

FIG. 5 is a diagram illustrating a device for automatically scrolling and capturing a chat window (hereinafter, automatic scroll capture device 500) in an Android-based portable terminal according to an example embodiment.

The automatic scroll capture device 500 according to an example embodiment may include a screen capture command input unit 510, an XML data acquisition unit 520, a screen capture image creation unit 530, and a control unit 540.

Initially, the screen capture command input unit 510 receives a screen capture command as input.

The screen capture command input unit 510 may receive the screen capture command from a user or may receive the screen capture command through a separately running application.

Also, a command input to the screen capture command input unit 510 may be mainly input through a terminal or a user interface, and the command may include a specific parameter or option related to screen capture.

The screen capture command input unit 510 may process the input command and may guide a system or an application to perform an appropriate task. For example, a task, such as inspecting validity of the command or collecting necessary additional information, may be performed. Also, the scope, format, or other related settings of screen capture may be determined by interpreting the input command.

Then, the XML data acquisition unit 520 may acquire XML data for the current screen of the portable terminal using Android's screen dump function based on the input screen capture command, and may acquire at least one piece of XML data while scrolling the screen by the number of selected pixels at a location at which the XML data for the current screen is acquired.

In the process of acquiring the XML data, the XML data acquisition unit 520 may extract detailed information on a structure of a UI and corresponding elements displayed on the screen in XML format.

The XML data acquisition unit 520 calls a screen dump function, processes the resulting XML data, and extracts hierarchical structure, attributes, coordinates, and other related information of UI elements displayed on the screen. The XML data acquired in this manner may be used as base information for an automatic scrolling and capturing task in a subsequent operation.

The XML data acquisition unit 520 according to an example embodiment may acquire at least one piece of XML data by changing a location from an n-th location at which the XML data for the current screen is acquired to a specific location while scrolling the screen by the number of selected pixels.

The XML data acquisition unit 520 may start from the n-th location at which the XML data for the current screen is acquired and may move to the specific location by changing a location of the screen while scrolling the screen by the number of selected pixels. Through this process, the at least one piece of XML data may be acquired.

Scrolling to the specific location may be performed using a scrolling mechanism provided from Android platform. The XML data acquisition unit 520 may manipulate a scrolling motion and may additionally acquire XML data of a corresponding location each time a new screen area appears. By collecting XML data at various locations in this manner, a variety of information across the entire chat window may be acquired.

The XML data acquisition unit 520 according to another example embodiment may acquire at least one piece of XML data by changing the location until the end of the running chat window is reached.

The XML data acquisition unit 520 may detect the end of the chat window and may continuously collect XML data of a corresponding location each time the chat window is scrolled. When the chat window reaches the end, the acquired XML data may constitute final results. Through this, the XML data may be collected over the entire content of the chat window and this information may be used for an automatic scrolling and capturing task.

The XML data acquisition unit 520 according to still another example embodiment may identify an end location included in the screen capture command and may acquire the at least one piece of XML data by scrolling the screen until the identified end location is reached.

When the user designates the end location in the command, the XML data acquisition unit 520 may continuously collect XML data while scrolling to the corresponding location. Once the end location is reached, final results may be formed by synthesizing the acquired XML data and, in this manner, it is possible to automatically scroll and capture the chat window until a specific point desired to be captured.

The screen capture image creation unit 530 may create a screen capture image by integrating the acquired XML data.

The screen capture image creation unit 530 may create an image representing the entire screen by interpreting information on each UI element of the screen included in the XML data and by combining the same. Attributes, such as a location, a size, and text of each UI element, may be appropriately arranged based on the XML data and converted to an image. Through this image creation process, an image visually representing capture of a screen requested by the user may be ultimately created.

For example, the screen capture image creation unit 530 may identify common data between consecutive XML data, and may combine a captured image for the current screen and a captured image for a next screen. In this case, the screen capture image creation unit 530 may combine a captured image after a portion corresponding to the common data in the captured image of the next screen, and may create the screen capture image by combining a captured image for all remaining of the acquired XML data.

The control unit 540 may be interpreted as a central processing unit (CPU) and may perform various operations within a system and process data.

In particular, the control unit 540 may read a command from a memory and may interpret and execute the command, and may also perform an arithmetic operation, such as addition, subtraction, multiplication, and division.

Also, the control unit 540 may process data storage load (retrieval) and may perform a function of reading data from the memory and restoring results of performing operations back in the memory.

Also, the control unit 540 may manage the execution flow of the program. In particular, the control unit 540 may control flow of the program using a command such as conditional statement (if-else) and loop statement (for, while). Also, the control unit 540 may have a small and fast memory device called register and this register may be used to temporarily store data or to perform an operation.

When an external event or an exceptional situation occurs, the control unit 540 may process the same and take an appropriate action, and may quickly access data and a command using a cache memory that is faster than a main memory.

In addition, the control unit 540 may use a system bus to communicate with the memory or an input/output (I/O) device and may provide various power management functions for minimizing power consumption.

According to example embodiments, it is possible to automatically scroll and capture a chat window running on an Android-based portable terminal and to accurately and quickly process chat window capture of the portable terminal.

The apparatuses described herein may be implemented using hardware components, software components, and/or combination of the hardware components and the software components. For example, the apparatuses and the components described herein may be implemented using one or more general-purpose or special purpose computers, such as, for example, a processor, a controller, an arithmetic logic unit (ALU), a digital signal processor, a microcomputer, a field programmable array (FPA), a programmable logic unit (PLU), a microprocessor, or any other device capable of responding to and executing instructions in a defined manner. The processing device may run an operating system (OS) and one or more software applications that run on the OS. The processing device also may access, store, manipulate, process, and create data in response to execution of the software. For purpose of simplicity, the description of a processing device is used as singular; however, one skilled in the art will be appreciated that the processing device may include multiple processing elements and/or multiple types of processing elements. For example, the processing device may include multiple processors or a processor and a controller. In addition, different processing configurations are possible, such as parallel processors.

The software may include a computer program, a piece of code, an instruction, or some combinations thereof, for independently or collectively instructing or configuring the processing device to operate as desired. Software and/or data may be permanently or temporarily embodied in any type of machine, component, physical equipment, virtual equipment, a computer storage medium or device, or a signal wave to be transmitted to be interpreted by the processing device or to provide an instruction or data to the processing device. The software also may be distributed over network coupled computer systems so that the software is stored and executed in a distributed fashion. The software and data may be stored by one or more computer readable storage media.

The methods according to the above-described example embodiments may be configured in a form of program instructions performed through various computer devices and recorded in computer-readable media. The media may include, alone or in combination with program instructions, data files, data structures, and the like. The program instructions recorded in the media may be specially designed and configured for the example embodiments, or may be known and available to those skilled in the computer software art. Examples of the media include magnetic media such as hard disks, floppy disks, and magnetic tapes; optical media such as CD-ROM and DVDs; magneto-optical media such as floptical disks; and hardware devices that are configured to store program instructions, such as read-only memory (ROM), random access memory (RAM), flash memory, and the like. Examples of the program instructions include a machine language code as produced by a compiler and an advanced language code executable by a computer using an interpreter. The hardware device may be configured to operate as at least one software module, or vice versa.

## Claims

1. A method of automatically scrolling and capturing a chat window running in an Android-based portable terminal, the method comprising:
receiving a screen capture command as input (101);
acquiring XML data for a current screen of the portable terminal using Android's screen dump function based on the input screen capture command (102);
acquiring at least one piece of XML data while scrolling the screen by the number of selected pixels at a location at which the XML data for the current screen is acquired (103); and
creating a screen capture image by integrating the acquired XML data (106).

2. The method of claim 1, wherein the acquiring of the at least one piece of XML data while scrolling the screen by the number of selected pixels at the location at which the XML data for the current screen is acquired (103) comprises acquiring the at least one piece of XML data by changing a location from an n-th location at which the XML data for the current screen is acquired to a specific location while scrolling the screen by the number of selected pixels.

3. The method of claim 1 or 2, wherein the acquiring of the at least one piece of XML data while scrolling the screen by the number of selected pixels at the location at which the XML data for the current screen is acquired (103) comprises acquiring the at least one piece of XML data by changing the location until an end of the running chat window is reached.

4. The method of one of claims 1 to 3, wherein the acquiring of the at least one piece of XML data while scrolling the screen by the number of selected pixels at the location at which the XML data for the current screen is acquired (103) comprises:
identifying an end location included in the screen capture command; and
acquiring the at least one piece of XML data while scrolling the screen until the identified end location is reached.

5. The method of one of claims 1 to 4, wherein the creating of the screen capture image by integrating the acquired XML data (106) comprises:
identifying common data between consecutive XML data;
combining a captured image for the current screen and a captured image for a next screen and combining a captured image after a portion corresponding to the common data in the captured image of the next screen; and
creating the screen capture image by combining a captured image for all remaining of the acquired XML data.

6. A device for automatically scrolling and capturing a chat window running in an Android-based portable terminal, the automatic scroll capture device comprising:
a screen capture command input unit (510) configured to receive a screen capture command as input;
an XML data acquisition unit (520) configured to acquire XML data for a current screen of the portable terminal using Android's screen dump function based on the input screen capture command, and to acquire at least one piece of XML data while scrolling the screen by the number of selected pixels at a location at which the XML data for the current screen is acquired; and
a screen capture image creation unit (530) configured to create a screen capture image by integrating the acquired XML data.

7. The automatic scroll capture device of claim 6, wherein the XML data acquisition unit (520) is configured to acquire the at least one piece of XML data by changing a location from an n-th location at which the XML data for the current screen is acquired to a specific location while scrolling the screen by the number of selected pixels.

8. The automatic scroll capture device of claim 6 or 7, wherein the XML data acquisition unit (520) is configured to acquire the at least one piece of XML data by changing the location until an end of the running chat window is reached.

9. The automatic scroll capture device of one of claims 6 to 8, wherein the XML data acquisition unit (520) is configured to identify an end location included in the screen capture command, and to acquire the at least one piece of XML data while scrolling the screen until the identified end location is reached.

10. The automatic scroll capture device of one of claims 6 to 9, wherein the screen capture image creation unit (530) is configured to identify common data between consecutive XML data, to combine a captured image for the current screen and a captured image for a next screen and combine a captured image after a portion corresponding to the common data in the captured image of the next screen, and to create the screen capture image by combining a captured image for all remaining of the acquired XML data.

## Patentansprüche

1. Verfahren zum automatischen Scrollen und Erfassen eines Chat-Fensters, das in einem Android-basierten tragbaren Endgerät läuft, wobei das Verfahren umfasst:
Empfangen eines Bildschirmaufnahmebefehls als Eingabe (101);
Erfassen von XML-Daten für einen aktuellen Bildschirm des tragbaren Endgeräts unter Verwendung der Android Bildschirmabbildungsfunktion basierend auf dem eingegebenen Bildschirmaufnahmebefehl (102);
Erfassen mindestens eines Teils von XML-Daten während des Scrollens des Bildschirms durch die Anzahl ausgewählter Pixel an einer Stelle, an der die XML-Daten für den aktuellen Bildschirm erfasst werden (103); und
Erzeugen eines Bildschirmaufnahmebildes durch Integrieren der erfassten XML-Daten (106).

2. Verfahren nach Anspruch 1, wobei das Erfassen des mindestens einen Teils von XML-Daten während des Scrollens des Bildschirms durch die Anzahl ausgewählter Pixel an der Stelle, an der die XML-Daten für den aktuellen Bildschirm erfasst werden (103), das Erfassen des mindestens einen Teils von XML-Daten durch Ändern einer Stelle von einer n-ten Stelle, an der die XML-Daten für den aktuellen Bildschirm erfasst werden, zu einer spezifischen Stelle während des Scrollens des Bildschirms durch die Anzahl ausgewählter Pixel umfasst.

3. Verfahren nach Anspruch 1 oder 2, wobei das Erfassen des mindestens einen Teils von XML-Daten während des Scrollens des Bildschirms durch die Anzahl ausgewählter Pixel an der Stelle, an der die XML-Daten für den aktuellen Bildschirm erfasst werden (103), das Erfassen des mindestens einen Teils von XML-Daten durch Ändern der Stelle, bis ein Ende des laufenden Chat-Fensters erreicht ist, umfasst.

4. Verfahren nach einem der Ansprüche 1 bis 3, wobei das Erfassen des mindestens einen Teils von XML-Daten während des Scrollens des Bildschirms durch die Anzahl ausgewählter Pixel an der Stelle, an der die XML-Daten für den aktuellen Bildschirm erfasst werden (103), umfasst:
Identifizieren einer Endstelle, die in dem Bildschirmaufnahmebefehl enthalten ist; und
Erfassen des mindestens einen Teils von XML-Daten während des Scrollens des Bildschirms, bis die identifizierte Endstelle erreicht ist.

5. Verfahren nach einem der Ansprüche 1 bis 4, wobei das Erzeugen des Bildschirmaufnahmebildes durch Integrieren der erfassten XML-Daten (106) umfasst:
Identifizieren gemeinsamer Daten zwischen aufeinanderfolgenden XML-Daten;
Kombinieren eines aufgenommenen Bildes für den aktuellen Bildschirm und eines aufgenommenen Bildes für einen nächsten Bildschirm und Kombinieren eines aufgenommenen Bildes nach einem Abschnitt, der den gemeinsamen Daten in dem aufgenommenen Bild des nächsten Bildschirms entspricht; und
Erzeugen des Bildschirmaufnahmebildes durch Kombinieren eines aufgenommenen Bildes für alle verbleibenden der erfassten XML-Daten.

6. Vorrichtung zum automatischen Scrollen und Erfassen eines Chat-Fensters, das in einem Android-basierten tragbaren Endgerät läuft, wobei die automatische Scroll-Erfassungsvorrichtung umfasst:
eine Bildschirmaufnahmebefehl-Eingabeeinheit (510), die konfiguriert ist, um einen Bildschirmaufnahmebefehl als Eingabe zu empfangen;
eine XML-Daten-Erfassungseinheit (520), die konfiguriert ist, um XML-Daten für einen aktuellen Bildschirm des tragbaren Endgeräts unter Verwendung der Android-Bildschirmabbildungsfunktion basierend auf dem eingegebenen Bildschirmaufnahmebefehl zu erfassen und mindestens einen Teil von XML-Daten während des Scrollens des Bildschirms durch die Anzahl ausgewählter Pixel an einer Stelle, an der die XML-Daten für den aktuellen Bildschirm erfasst werden, zu erfassen; und
eine Bildschirmaufnahmebild-Erzeugungseinheit (530), die konfiguriert ist, um ein Bildschirmaufnahmebild durch Integrieren der erfassten XML-Daten zu erzeugen.

7. Automatische Scroll-Erfassungsvorrichtung nach Anspruch 6, wobei die XML-Daten-Erfassungseinheit (520) konfiguriert ist, um den mindestens einen Teil von XML-Daten durch Ändern einer Stelle von einer n-ten Stelle, an der die XML-Daten für den aktuellen Bildschirm erfasst werden, zu einer spezifischen Stelle während des Scrollens des Bildschirms durch die Anzahl ausgewählter Pixel zu erfassen.

8. Automatische Scroll-Erfassungsvorrichtung nach Anspruch 6 oder 7, wobei die XML-Daten-Erfassungseinheit (520) konfiguriert ist, um den mindestens einen Teil von XML-Daten durch Ändern der Stelle, bis ein Ende des laufenden Chat-Fensters erreicht ist, zu erfassen.

9. Automatische Scroll-Erfassungsvorrichtung nach einem der Ansprüche 6 bis 8, wobei die XML-Daten-Erfassungseinheit (520) konfiguriert ist, um eine Endstelle, die in dem Bildschirmaufnahmebefehl enthalten ist, zu identifizieren und den mindestens einen Teil von XML-Daten während des Scrollens des Bildschirms, bis die identifizierte Endstelle erreicht ist, zu erfassen.

10. Automatische Scroll-Erfassungsvorrichtung nach einem der Ansprüche 6 bis 9, wobei die Bildschirmaufnahmebild-Erzeugungseinheit (530) konfiguriert ist, um gemeinsame Daten zwischen aufeinanderfolgenden XML-Daten zu identifizieren, ein aufgenommenes Bild für den aktuellen Bildschirm und ein aufgenommenes Bild für einen nächsten Bildschirm zu kombinieren und ein aufgenommenes Bild nach einem Abschnitt, der den gemeinsamen Daten in dem aufgenommenen Bild des nächsten Bildschirms entspricht, zu kombinieren und das Bildschirmaufnahmebild durch Kombinieren eines aufgenommenen Bildes für alle verbleibenden der erfassten XML-Daten zu erzeugen.

## Revendications

1. Procédé de défilement automatique et de capture d'une fenêtre de conversation s'exécutant dans un terminal portable basé sur Android, le procédé comprenant :
la réception d'une commande de capture d'écran en tant qu'entrée (101) ;
l'acquisition de données XML pour un écran actuel du terminal portable en utilisant la fonction de capture d'écran d'Android sur la base de la commande de capture d'écran d'entrée (102) ;
l'acquisition d'au moins un élément de données XML tout en faisant défiler l'écran par le nombre de pixels sélectionnés à un emplacement auquel les données XML pour l'écran actuel sont acquises (103) ; et
la création d'une image de capture d'écran en intégrant les données XML acquises (106).

2. Procédé selon la revendication 1, dans lequel l'acquisition de l'au moins un élément de données XML tout en faisant défiler l'écran par le nombre de pixels sélectionnés à l'emplacement auquel les données XML pour l'écran actuel sont acquises (103) comprend l'acquisition de l'au moins un élément de données XML en changeant un emplacement d'un n-ième emplacement auquel les données XML pour l'écran actuel sont acquises à un emplacement spécifique tout en faisant défiler l'écran par le nombre de pixels sélectionnés.

3. Procédé selon la revendication 1 ou 2, dans lequel l'acquisition de l'au moins un élément de données XML tout en faisant défiler l'écran par le nombre de pixels sélectionnés à l'emplacement auquel les données XML pour l'écran actuel sont acquises (103) comprend l'acquisition de l'au moins un élément de données XML en changeant l'emplacement jusqu'à ce qu'une fin de la fenêtre de conversation en cours d'exécution soit atteinte.

4. Procédé selon l'une des revendications 1 à 3, dans lequel l'acquisition de l'au moins un élément de données XML tout en faisant défiler l'écran par le nombre de pixels sélectionnés à l'emplacement auquel les données XML pour l'écran actuel sont acquises (103) comprend :
l'identification d'un emplacement de fin inclus dans la commande de capture d'écran ; et
l'acquisition de l'au moins un élément de données XML tout en faisant défiler l'écran jusqu'à ce que l'emplacement de fin identifié soit atteint.

5. Procédé selon l'une des revendications 1 à 4, dans lequel la création de l'image de capture d'écran en intégrant les données XML acquises (106) comprend :
l'identification de données communes entre des données XML consécutives ;
la combinaison d'une image capturée pour l'écran actuel et d'une image capturée pour un écran suivant et la combinaison d'une image capturée après une partie correspondant aux données communes dans l'image capturée de l'écran suivant ; et
la création de l'image de capture d'écran en combinant une image capturée pour toutes les données restantes des données XML acquises.

6. Dispositif de défilement automatique et de capture d'une fenêtre de conversation s'exécutant dans un terminal portable basé sur Android, le dispositif de capture de défilement automatique comprenant :
une unité d'entrée de commande de capture d'écran (510) configurée pour recevoir une commande de capture d'écran en tant qu'entrée ;
une unité d'acquisition de données XML (520) configurée pour acquérir des données XML pour un écran actuel du terminal portable en utilisant la fonction de capture d'écran d'Android sur la base de la commande de capture d'écran d'entrée, et pour acquérir au moins un élément de données XML tout en faisant défiler l'écran par le nombre de pixels sélectionnés à un emplacement auquel les données XML pour l'écran actuel sont acquises ; et
une unité de création d'image de capture d'écran (530) configurée pour créer une image de capture d'écran en intégrant les données XML acquises.

7. Dispositif de capture de défilement automatique selon la revendication 6, dans lequel l'unité d'acquisition de données XML (520) est configurée pour acquérir l'au moins un élément de données XML en changeant un emplacement d'un n-ième emplacement auquel les données XML pour l'écran actuel sont acquises à un emplacement spécifique tout en faisant défiler l'écran par le nombre de pixels sélectionnés.

8. Dispositif de capture de défilement automatique selon la revendication 6 ou 7, dans lequel l'unité d'acquisition de données XML (520) est configurée pour acquérir l'au moins un élément de données XML en changeant l'emplacement jusqu'à ce qu'une fin de la fenêtre de conversation en cours d'exécution soit atteinte.

9. Dispositif de capture de défilement automatique selon l'une des revendications 6 à 8, dans lequel l'unité d'acquisition de données XML (520) est configurée pour identifier un emplacement de fin inclus dans la commande de capture d'écran, et pour acquérir l'au moins un élément de données XML tout en faisant défiler l'écran jusqu'à ce que l'emplacement de fin identifié soit atteint.

10. Dispositif de capture de défilement automatique selon l'une des revendications 6 à 9, dans lequel l'unité de création d'image de capture d'écran (530) est configurée pour identifier des données communes entre des données XML consécutives, pour combiner une image capturée pour l'écran actuel et une image capturée pour un écran suivant et pour combiner une image capturée après une partie correspondant aux données communes dans l'image capturée de l'écran suivant, et pour créer l'image de capture d'écran en combinant une image capturée pour toutes les données restantes des données XML acquises.
